# EUROPÄISCHE PATENTSCHRIFT

(11) **EP 0 257 180 B1**
(45) Veröffentlichungstag und Bekanntmachung des Hinweises auf die Patenterteilung: **07.04.1993**
(21) Anmeldenummer: 87103659.6
(22) Anmeldetag: 13.03.1987
(51) Int. Cl.: G05D 3/14

(54) **Anordnung zur Betätigung eines Stellgliedes**
Apparatus for actuating a servo motor
Dispositif d'actionnement d'un servo-moteur

(30) Priorität: 22.08.1986 DE 3628535
(43) Veröffentlichungstag der Anmeldung: 02.03.1988
(73) Patentinhaber: Mannesmann VDO AG, 60326 Frankfurt (DE)
(72) Erfinder: Pfalzgraf, Manfred, D-6000 Frankfurt am Main 1 (DE); Stoll, Bernward, D-6000 Frankfurt am Main 60 (DE); Wokan, Andreas, D-6237 Liederbach (DE); Probst, Kurt, D-6231 Schwalbach (DE)
(74) Vertreter: Klein, Thomas, Dipl.-Ing. (FH)

(56) Entgegenhaltungen:
- EP-A- 0 100 391
- FR-A- 2 348 525
- FR-A- 2 437 111
- US-A- 3 482 113
- US-A- 4 591 773
- PATENT ABSTRACTS OF JAPAN, Band 11, Nr. 107 (P-563)[2554], 4. April 1987;& JP-A-61 255 415
- PATENT ABSTRACTS OF JAPAN, Band 10, Nr. 344 (P-518)[2400], 20. November 1986;& JP-A-61 145 613
- PATENT ABSTRACTS OF JAPAN, Band 6, Nr. 148 (P-133)[1026], 7. August 1982, Seite 127 P 133;& JP-A-57 69 414

## Beschreibung

Die Erfindung betrifft eine Anordnung zur Betätigung eines Stellgliedes, insbesondere für die Leistungsregelung von Kraftfahrzeugmotoren, mit einem Sollwertgeber, einem Istwertgeber und einem Regler, der das Stellglied mit einem Signal entsprechend dem Unterschied der vom Sollwertgeber und Istwertgeber abgegebenen Spannungen ansteuert.

Eine Anordnung dieser Art ist aus der US-A 4 591 773 bekannt. Für den Fall, daß die Drosselklappe mechanisch nicht mehr zu bewegen ist, hat man eine Differenzierschaltung und eine Zeit-Überwachung vorgesehen, um das elektromotorische Stellglied vor einer Zerstörung durch Dauerbeaufschlagung zu schützen. Mit anderen Worten, wird der Unterschied zwischen Soll- und Istwert nicht innerhalb einer vorgebbaren Zeit ausgeglichen, wird die Stromzufuhr zum Stellglied unterbrochen.

Außer derartigen mechanischen Störungen können selbstverständlich auch Störungen im elektrischen und elektronischen Teil der Anordnung, beispielsweise beim Istwertgeber selbst oder in dessen Zuleitungen auftreten. Während im ersten Fall ein Notfahrbetrieb gar nicht in Betracht kommt, möchte man im zweiten Fall einen Notfahrbetrieb aufrechterhalten können. Störungen bei der Rückmeldung des Istwerts sollen jedenfalls dann nicht zu einem Totalausfall führen, wenn das Stellglied mechanisch noch beweglich ist.

Der Erfindung liegt die Aufgabe zugrunde, bei einer Anordnung der eingangs genannten Art einen Notfahrbetrieb des Stellglieds zu ermöglichen, wenn der Istwertgeber oder eine Verbindungsleitung zum Istwertgeber defekt ist.

Diese Aufgabe wird gemäß dem Anspruch 1 dadurch gelöst, daß dem Regler ein Schalter zugeordnet ist, der den Regler von einer ersten auf eine zweite Betriebsart umschaltet, bei der das Stellglied mit einem dem Sollwert proportionalen Strom angesteuert wird, wenn der Istwertgeber oder eine Verbindungsleitung zum Istwertgeber defekt ist.

Vorteilhafte Ausgestaltungen des Erfindungsgedankens sind in den Ansprüchen 2 bis 6 beschrieben.

Die Erfindung läßt zahlreiche Ausführungsformen zu. Eine davon ist schematisch in der Zeichnung an Hand mehrerer Figuren dargestellt und nachfolgend beschrieben. Es zeigt:
- Fig. 1: ein Blockschaltbild einer erfindungsgemäßen Anordnung und
- Fig. 2: schematisch ein Stellglied, welches bei der erfindungsgemäßen Anordnung verwendet wird.

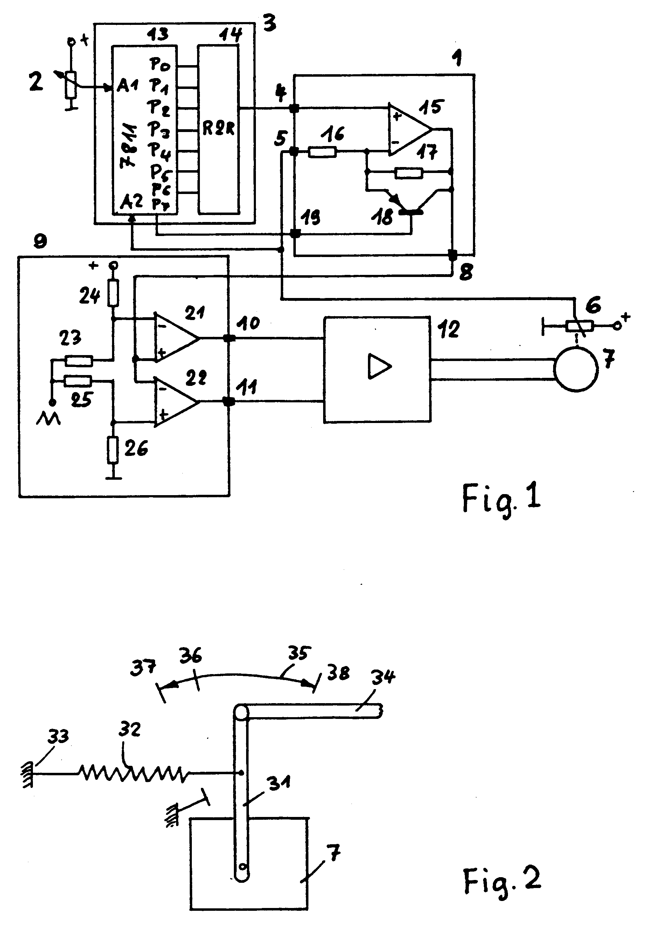

Bei der Anordnung nach Fig. 1 wird einem Regler 1 von einem Sollwertgeber 2 und einer digitalen Steuereinrichtung 3 ein Sollwert zugeführt.

Ein Istwertgeber 6 ist mit dem Stellglied 7 mechanisch verbunden und erzeugt eine Spannung, welche proportional zur Auslenkung des Stellgliedes 7 ist. Diese Spannung wird über den Eingang 5 ebenfalls dem Regler 1 zugeführt.

Der Ausgang 8 des Reglers 1 ist mit einem Pulsbreitenmodulator 9 verbunden, an dessen Ausgängen 10, 11 Rechteckimpulse anstehen, deren Breite proportional zur Spannung am Ausgang 8 des Reglers 1 ist. Dabei treten jeweils nur an einem der Ausgänge 10 bzw. 11 in Abhängigkeit von der Polarität der Spannung am Ausgang 8 des Reglers 1 Impulse auf.

Die Ausgangsimpulse des Pulsbreitenmodulators 9 werden über eine Gegentaktendstufe 12 dem Stellglied 7 zugeführt.

Die digitale Steuereinrichtung 3 besteht aus einem Mikrocomputer 13 und einem Digital/Analog-Wandler 14. Der Mikrocomputer 13 enthält u. a. einen Analog/Digital-Wandler, dem ein Multiplexer vorgeschaltet ist, so daß mehrere analoge Größen zugeführt werden können. So werden der Sollwert vom als Potentiometer ausgebildeten Sollwertgebe 2 und der Istwert vom Istwertgeber 6 den Eingängen A1 und A2 zugeführt. Die digitale Steuereinrichtung ist Teil eines übergeordneten nicht dargestellten Steuer- bzw. Regelsystems. Beispielsweise bei der Verwendung der erfindungsgemäßen Anordnung als elektronischer Motor-Leistungsregler (E-Gas) können verschiedene Betriebsparameter des Motors in der digitalen Steuereinrichtung ausgewertet und der dem Regler 1 zugeführte Sollwert entsprechend verändert werden.

Der Regler 1 besteht bei dem dargestellten Ausführungsbeispiel im wesentlichen aus einem Differenzverstärker 15, dessen nichtinvertierendem Eingang über den Eingang 4 der Sollwert und dessen invertierendem Eingang über den Eingang 5 und einen Widerstand 16 der Istwert zugeführt wird. Ein Gegenkopplungswiderstand 17 ist zwischen dem invertierenden Eingang und dem Ausgang des Differenzverstärkers 15 angeordnet. Der Gegenkopplungswiderstand 17 kann mit Hilfe eines Transistors 18 überbrückt werden, wenn an den Steuereingang 19 eine entsprechende Spannung angelegt wird.

Ist der Transistor 18 leitend, so ist die zwischen dem Eingang 4 und dem Ausgang 8 des Reglers 1 wirksame Verstärkung gleich 1, während die Verstärkung zwischen dem Eingang 5 und dem Ausgang 8 gleich null wird. Die am Ausgang 8 anliegende Spannung ist also nicht von der vom Istwertgeber 6 abgegebenen Spannung abhängig, sondern ist proportional zu dem bei 4 zugeführten Sollwert.

Der Pulsbreitenmodulator 9 umfaßt zwei Differenzverstärker 21, 22, von denen jeweils ein nichtinvertierender und ein invertierender Eingang mit der Ausgangsspannung des Reglers 1 beaufschlagt ist. Den weiteren Eingängen der Differenzverstärker 21, 22 wird über je einen Spannungsteiler 23, 24 bzw. 25, 26 eine dreieckförmige Spannung zugeführt. Je nach Polarität und Größe der Ausgangsspannung des Reglers 1 ergeben sich darum an den Ausgängen 10, 11 der Differenzverstärker 21, 22 Impulse verschiedener Breite, welche ein entsprechendes Drehmoment des Motors des Stellgliedes 7 zur Folge haben, das wiederum durch Zusammenwirken mit einer definierten Feder eine dazu proportionale Auslenkung des Stellgliedes 7 zur Folge hat.

Ein Beispiel für ein geeignetes Stellglied ist in Fig. 2 dargestellt. Dabei wird von einem Elektromotor, der ein Drehmoment abgibt, das dem ihm zugeführten Strom proportional ist, ein hebelartiges Stellelement 31 bewegt. Hierzu eignen sich in vorteilhafter Weise sogenannte Drehmomentmotore. An dem Stellelement 31 ist ein Ende einer Feder 32 befestigt, welche in schematisch dargestellter Weise mit ihrem anderen Ende mit einem festen Punkt 33 verbunden ist. Die Feder 32 weist eine definierte Federkonstante auf, so daß die Auslenkung des Stellelementes 31 proportional zum Drehmoment und damit zum zugeführten Strom bzw. zum Mittelwert der zugeführten Stromimpulse ist.

An dem Stellelement 31 ist ferner eine Anlenkung 34 für das zuverstellende Organ vorgesehen. Dieses kann beispielsweise die Drosselklappe eines Verbrennungsmotors sein. Je nach Erfordernissen des Einzelfalles kann der durch den Doppelpfeil 35 gekennzeichnete Auslenkungsbereich derart aufgeteilt sein, daß die Feder 32 das Stellelement 31 in einer zwischen den Endstellungen befindlichen Ruhestellung 36 hält, wenn kein Strom zugeführt wird. Je nach Polarität des Stromes erfolgt die Auslenkung dann in zwei Richtungen bis zu den Endstellungen 37, 38. Dieses hat bei der Steuerung eines Verbrennungsmotors den Vorteil, daß bei Ausbleiben der Ansteuerung des Stellgliedes ein Starten des Motors möglich ist.

Es ist jedoch auch möglich, die Nullstellung bei 37 vorzusehen und die bei maximalem Strom erzielbare Endstellung bei 38. Hierbei kann dann der Pulsbreitenmodulator 9 (Fig. 1) entsprechend vereinfacht werden.

Bei intaktem Sollwertgeber 6 kann der Regler 1 als Regler arbeiten, wodurch eine genaue Auslenkung des Stellgliedes 7 entsprechend dem zugeführten Sollwert gewährleistet ist. Im Falle eines Defekts des Istwertgebers 6 bzw. der Leitung von dem Istwertgeber 6 zum Eingang 5 des Reglers kann der Regler 1 auf eine Betriebsart umgeschaltet werden, bei welcher der bei 4 zugeführte Sollwert direkt über den Ausgang 8 weitergeleitet wird und eine entsprechende Auslenkung des Stellelementes 31 (Fig. 2) des Stellgliedes 7 durch den gegebenen Zusammenhang zwischen dem zugeführten Strom und der Rückstellkraft der Feder 32 gegeben ist. Um zu erkennen, daß ein Defekt vorliegt, wird der Istwert ebenfalls dem Mikrocomputer zugeführt und mit dem Sollwert verglichen. Liegt eine größere Abweichung länger als eine vorgegebene Zeit vor, so wird ein Defekt angenommen.

## Patentansprüche

1. Anordnung zur Betätigung eines Stellgliedes (7), insbesondere für die Leistungsregelung von Kraftfahrzeugmotoren, mit einem Sollwertgeber (2), einem Istwertgeber (6) und einem Regler (1), der das Stellglied (7) mit einem Signal entsprechend dem Unterschied der vom Sollwertgeber (2) und Istwertgeber (6) abgegebenen Spannungen ansteuert, **dadurch gekennzeichnet,** daß dem Regler (1) ein Schalter (18) zugeordnet ist, der den Regler (1) von einer ersten auf eine zweite Betriebsart umschaltet, bei der das Stellglied (7) mit einem dem Sollwert proportionalen. Strom angesteuert wird, wenn der Istwertgeber (6) oder eine Verbindungsleitung zum Istwertgeber (6) defekt ist.

2. Anordnung nach Anspruch 1, **dadurch gekennzeichnet,** daß zwischen dem Sollwertgeber (2) und dem Regler (1) ein Mikroprozessor (13) angeordnet ist.

3. Anordnung nach Anspruch 2, dadurch gekennzeichnet, daß der Istwertgeber (6) und seine Verbindungsleitungen vom Mikroprozessor (13) überwacht werden und daß im Falle eines Defektes dem Schalter (18) vom Mikroprozessor (13) ein Umschaltsignal zugeführt wird.

4. Anordnung nach Anspruch 3, **dadurch gekennzeichnet,** daß vom Mikroprozessor (13) als defekt erkannt wird, wenn ein dem Mikroprozessor (13) als Istwert zugeführtes Signal länger als eine vorgegebene Zeit mehr als eine vorgegebene Differenz im Sollwert aufweist.

5. Anordnung nach einem der Ansprüche 1 bis 4, **dadurch gekennzeichnet,** daß der Regler (1) von einem Differenzverstärker (15) gebildet wird, dessen nicht invertierendem Eingang der Sollwert zugeführt wird und dessen invertierender Eingang über einen Widerstand (16) mit dem Ausgang des Istwertgebers (6) verbunden ist, und daß zwischen dem invertierenden Eingang und dem Ausgang des Differenzverstärkers (15) ein Gegenkopplungswiderstand (17) angeordnet ist, der mit Hilfe eines Transistors (18) überbrückbar ist.

6. Anordnung nach Anspruch 5, dadurch gekennzeichnet, daß zwischen dem Ausgang des Differenzverstärkers (15) und dem Stellglied (7) ein Pulsbreitenmodulator (9) angeordnet ist.

## Claims

1. Arrangement for operating a regulating element (7), especially for controlling the power of motor vehicle engines, with a desired-value signal emitter (2), an actual-value signal emitter (6), and a controller (1) which actuates the regulating element (7) with a signal corresponding to the difference between the voltages transmitted by the desired-value signal emitter (2) and the actual-value signal emitter (6), characterised in that there is associated with the controller (1) a switch (18) which switches-over the controller (1) from a first to a second operating mode wherein the regulating element (7) is actuated with a current proportional to the desired value if the actual-value signal emitter (6) or a connecting conductor to the actual-value signal emitter (6) is defective.

2. Arrangement according to claim 1, characterised in that a microprocessor (13) is arranged between the desired-value signal emitter (2) and the controller (1).

3. Arrangement according to claim 2, characterised in that the actual-value signal emitter (6) and its connecting conductors are monitored by the microprocessor (13) and that in the event of a defect a switch-over signal is sent to the switch (18) by the microprocessor (13).

4. Arrangement according to claim 3, characterised in that the microprocessor (13) recognises a defect if a signal fed as an actual value to the microprocessor (13) shows more than a given difference from the desired value for longer than a given time.

5. Arrangement according to one of claims 1 to 4, characterised in that the controller (1) is formed of a differential amplifier (15) to whose non-inverting input the desired value is fed and whose inverting input is connected via a resistor (16) to the output of the actual-value signal emitter (6), and that between the inverting input and the output of the differential amplifier (15) there is arranged a negative feedback resistor (17) which can be bridged with the help of a transistor (18).

6. Arrangement according to claim 5, characterised in that a pulse width modulator (9) is arranged between the output of the differential amplifier (15) and the regulating element (7).

## Revendications

1. Dispositif de manoeuvre d'un organe réglant (7), en particulier pour la régulation de la puissance des moteurs de véhicules motorisés, comportant un émetteur de valeur prescrite (2), un émetteur de valeur réelle (6) et un régulateur (1) qui pilote l'organe réglant (7) avec un signal correspondant à la différence des tensions fournies par l'émetteur de valeur prescrite (2) et l'émetteur de valeur réelle (6), dispositif caractérisé par le fait qu'au régulateur (1) correspond un commutateur (18), qui commute le régulateur (1) d'un premier à un second mode opératoire, l'organe réglant (7) étant piloté par une tension proportionnelle à la valeur prescrite lorsque l'émetteur de valeur réelle (6) ou un conducteur de liaison conduisant à l'émetteur de valeur réelle (6) est défaillant.

2. Dispositif selon la revendication 1, caractérisé par le fait qu'entre l'émetteur de valeur prescrite (2) et le régulateur (1) est disposé un microprocesseur (13).

3. Dispositif selon la revendication 2, caractérisé par le fait que l'émetteur de valeur réelle (6) et ses conducteurs de liaison sont surveillés par le microprocesseur (13) et qu'en cas de défaillance un signal de commutation est envoyé au commutateur (8) par le microprocesseur (13).

4. Dispositif selon la revendication 3, caractérisé par le fait que le microprocesseur (13) reconnait comme défaillance le fait qu'un signal envoyé au microprocesseur (13) en tant que valeur réelle présente, pendant plus longtemps qu'un temps prédéterminé, une différence, plus grande que prédéterminée, avec la valeur réelle.

5. Dispositif selon l'une des revendications 1 à 4, caractérisé par le fait que le régulateur (1) est formé par un amplificateur différentiel (15) à l'entrée non soustractive duquel est amenée la valeur prescrite et dont l'entrée soustractive est reliée, par l'intermédiaire d'une résistance (16), avec la sortie de l'émetteur de valeur réelle (6), et par le fait qu'entre l'entrée soustractive et la sortie de l'amplificateur différentiel (15) est disposée une résistance de contre-réaction qui peut être shuntée à l'aide d'un transistor (18).

6. Dispositif selon la revendication 5, caractérisé par le fait qu'entre la sortie de l'amplificateur différentiel (15) et l'organe réglant (7) est disposé un modulateur de largeur d'impulsion (9).
